# EUROPEAN PATENT SPECIFICATION

(11) **EP 1 423 784 B1**
(45) Date of publication and mention of the grant of the patent: **28.01.2015**
(21) Application number: 02775751.7
(22) Date of filing: 05.09.2002
(51) Int. Cl.: H04N 21/4335, H04N 21/45

(54) **Method and apparatus for adaptively storing program guide data**
Verfahren und Vorrichtung zum adaptiven Speichern von Programmanleitungsdaten
Procédé et appareil permettant de mettre en mémoire de manière adaptative des données de programmes télévisés

(30) Priority: 07.09.2001 US 318040 P; 06.03.2002 US 92039
(43) Date of publication of application: 02.06.2004
(73) Proprietor: Thomson Licensing, 92130 Issy-les-Moulineaux (FR)
(72) Inventor: KLOPFENSTEIN, Scott, Edward, Fishers, IN 46038 (US)
(74) Representative: Frese, Beate
(86) International application number: PCT/US2002/028184
(87) International publication number: WO 2003/023603

(56) References cited:
- JP-A- 2001 078 110
- US-A- 5 652 613
- US-A- 5 666 645
- US-A- 5 917 481
- US-B1- 6 209 131

## Description

### FIELD OF THE INVENTION

This invention relates to electronic program guides for televisions and receivers.

### BACKGROUND OF THE INVENTION

Television viewers, especially associated with premium cable and satellite programming services, often use an electronic program guide to select a program for viewing from a service provider or broadcast centre. For example, the viewer may use the program guide to order a pay-per view selection from a movie provider. Similarly, the viewer may select a particular category of programming, such as "Sports", and select a program for viewing from those offered in that category. Such program guides are generally provided using a video receiver coupled to a display device, e.g., a television set. Examples of a typical video receiver include a set top terminal, a Digital Broadcast Satellite (DBS) receiver, an Integrated Receiver-Decoder (IRD), and other types of television receivers.

To maintain a current program schedule in the program guide, the receiver periodically receives program guide information for a program schedule. Current specifications for an Advanced Program Guide (APG) require the storage of all received program guide information within a memory of the video receiver. Such memory is typically limited in size.

US-A-5,917,481 describes a method for receiving and storing an electronic television program guide. Electronic program guides may be coded into the video signals received by the TV receiver. Receivers allow users to program a list of "select-channel". When the receiver is in its select-channel mode, the receiver only tunes to the channels of the list of "select channels". Only program guide information associated with channels of the list is stored.

US-B1-6,209,131 describes a method for processing additional information in a display device by detecting if a new information is a substitute and by updating to the new information.

US-A-5,652,613 describes an intelligent electronic program guide memory system and method which automatically deletes the least valuable stored program information. The system first sweep obsolete schedule information. Than, if there is till insufficient memory available, the schedule information is prioritized and the last valuable information is deleted until enough space is available in memory.

JP-A-2001 078 110 describes an electronic program guide information display device, that receivers electronic program guide information and displays them, wherein electronic program guide information with respect to programs of unreceptible channels is eliminated.

### SUMMARY OF THE INVENTION

Method and apparatus suitable for use within a television receiver for storing program guide information, wherein a scan list identifies a plurality of channels available for reviewing, channels not included within the scan list have corresponding program guide data deleted from a program guide database. The program guide database may be arranged as a plurality of objects including channel objects.

A method according to an embodiment of the invention for adapting the storage of program guide information for a plurality of programs in a receiver memory comprises storing all received program guide information in said receiver memory and determining whether a channel is include within a scan list comprising a plurality of preferred channels and deleting, from said receiver memory program guide information associated with the channel if the channel is not included within the scan list.

### BRIEF DESCRIPTION OF THE DRAWINGS

The teachings of the present invention can be readily understood by considering the following detailed description in conjunction with the accompanying drawings, in which:
FIG. 1 depicts a high level block diagram of a broadcast system;
FIG. 2 depicts a block diagram of a receiver suitable for use in the system of FIG. 1;
FIG. 3 depicts exemplary program guide screen imagery;'
FIG. 4 depicts an embodiment of a program guide database;
FIG. 5 depicts an embodiment of a program guide database; and
FIG. 6 depicts a flow diagram of a method for allocating a memory in a receiver;

To facilitate understanding, identical reference numerals have been used, where possible, to designate identical elements that are common to the figures.

### DETAILED DESCRIPTION

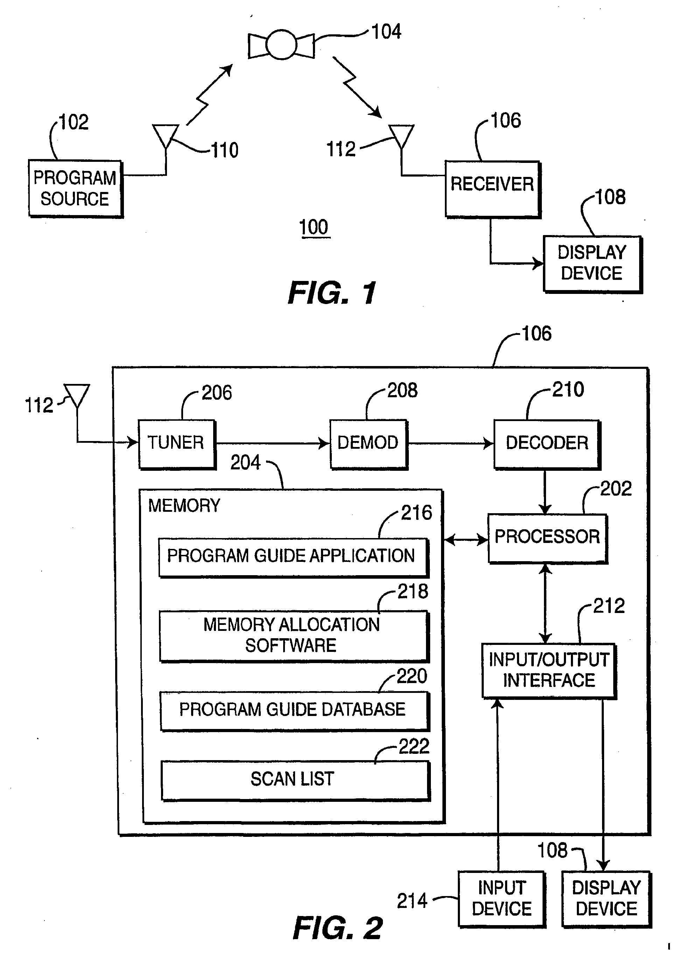

FIG. 1 depicts a high level block diagram of a broadcast system 100 for providing a program guide to a viewer of a television receiver set top terminal (STT) or other video receiver device. The system 100 of FIG. 1 comprises a program source 102, a satellite 104, a receiver 106 and a display device 108. Although one program source 102, one satellite 104 and one television receiver 106 is depicted in FIG. 1, the system 100 may comprise multiple program sources 102, multiple satellites 104 and multiple receivers 106. Additionally, the video broadcast system 100 is not limited to satellite transmission of video signals. For example, the system 100 may implement terrestrial stations to broadcast video signals.

The program source 102 broadcasts one or more video, audio, audiovisual and/or data signals via an antenna 110. In the case of a program comprising video, audio or audiovisual signals, the program is broadcast according to a program schedule. The program schedule defines the time and transmission channel used to broadcast the program for one or more geographic viewing areas. In the art, the signals may comprise a program in the form of an MPEG-formatted data stream. The program may comprise a television program, a movie, a live broadcast, an advertisement, or some other form of audiovisual signal.

The satellite 104 receives the signals from the signal source 102 and rebroadcasts the signals to a predefined geographical viewing area. Additionally, the satellite 104 may receive a request from a video receiver 106 to broadcast "program guide information". In one embodiment, the program guide information may comprise Advanced Program Guide (APG) information.

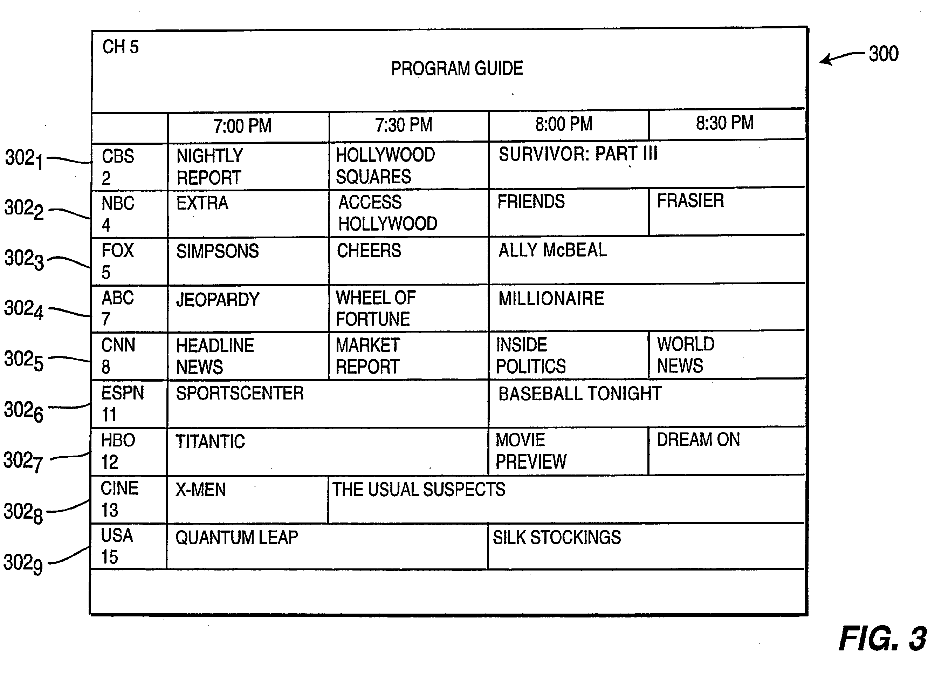

The receiver 106 receives the program guide information via an antenna 112 and stores the received information in a memory. The receiver 106 uses the program guide information to provide a program guide on a display device or some other form of output device. The program guide contains a listing of programs scheduled for broadcast over each channel accessible by the receiver 106. Exemplary program guide display imagery is described below with respect to FIG. 3.

Programs are scheduled for broadcast in accordance to a program schedule of a predetermined time frame or schedule length. The program guide displays only a current portion of the program schedule. The remainder of the program schedule is retained as program guide information stored in the memory of the receiver. The remainder portion of the program schedule is that portion of program guide scheduled for display in the future. As such, to maintain a current program guide, the receiver 106 must periodically obtain program guide information.

A viewer of the program guide may select a program displayed thereon. Once this occurs, the receiver 106 tunes to the satellite 104 (or satellite transponder/channel) broadcasting the selected program. The program is then received at the receiver 106 and provided to the display device 108. The receiver 106 is further described below with respect to FIG. 2.

FIG. 2 depicts a block diagram of the receiver 106 in the video system 100 of FIG. 1. In one embodiment, the video receiver 106 comprises a set top terminal (STT) or television receiver. The receiver 106 of FIG. 2 comprises a processor 202, a memory 204, a tuner 206, a demodulator 208 and a decoder 210. The receiver 106 may also comprise an input/output interface 212 and various support circuits (not shown).

The tuner 206 receives a plurality of signals from the satellite 104 and selects the appropriate signal or channel of interest. The demodulator 208 demodulates the selected signal. Common forms of demodulation include QAM (Quadrature Amplitude Modulation), QPSK (Quadrature Phase Shift Keying), and the like. The decoder 210 decodes program stream or program guide information within the demodulated signal. The decoder 210 may perform error correction such as forward error correction (FEC) as known to those skilled in the art.

The memory 204 stores software and data structures for the operation of the receiver 106. In one embodiment, the memory 204 stores a program guide application 216, memory allocation software (application) 218 and a program guide database 220. The memory 204 may comprise a combination of memory devices including random access memory (RAM), nonvolatile or backup memory (e.g., programmable or flash memories, read only memories (ROM), and the like).

The program guide application 216 comprises software programs having instructions which, when executed by the processor 202, provide program guide functionality in the television system 100. In the art, the program guide application 216 may include a software program operative to monitor viewing habits of a user or viewer. The viewing habits or history may include a history of program selections or a history of selecting a particular genre of program, e.g., sports, romance, comedy, drama, and the like. The program guide application 216 then uses the viewing habits to suggest or estimate programs or the types of programs that the viewer is likely to watch or not likely to watch.

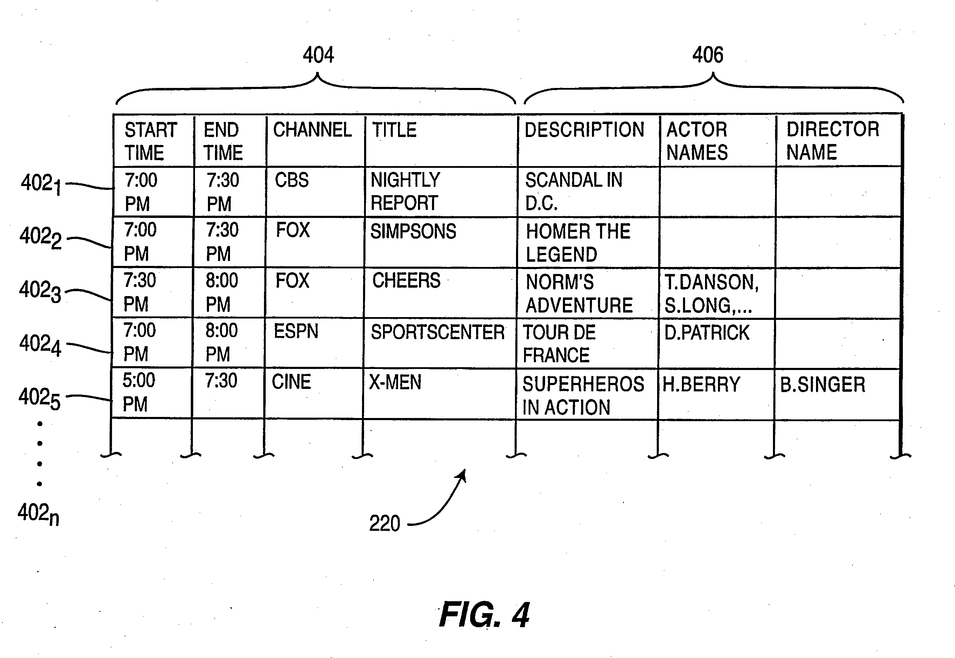

The memory allocation software 218 comprises a software program with instructions to allocate the storage of program guide information in the memory 204. The program guide database 220 contains program guide information relating to channels, schedules and programs in the program schedule. One embodiment of the program guide database 220 is further described with respect to FIG. 4. In this embodiment, a program guide database 220 comprises a plurality of objects including channel objects, schedule objects and program objects. Each of these database objects includes respective attributes associated with, respectively, channel data, schedule data and program data.

The scan list 222 stored in memory 204 comprises, illustratively, a data structure containing channels that are of interest to a viewer, i.e., preferred channels. In one embodiment, the scan list 222 contains channels to be displayed as part of program guide imagery. As such, if a channel is no longer of interest to a user (i.e., a non-preferred channel), the channel is removed from the scan list 222 and, therefore, removed from the display program guide imagery. If a user decides to watch programs provided via that channel again, the channel is then added back to the scan list 222 and the program guide imagery.

Each channel provides programs according to a program schedule. Information pertaining to the channel, the program schedule, and the programs to be provided are stored in the memory 204. The present invention operates to remove channel, schedule and program information from the memory 204 if such information is received from the scan list 222. However, if the information is also associated with another channel that remains on the scan list 222, then the program and schedule information is not removed from the memory 204. The scan list 222 is used to determine which program guide information is to be stored in the memory 204. By removing program guide information from the memory 204 (via removal of channel information from the scan list 222), portions of the memory 204 are released for other uses. Such other uses may comprise, for example, the storage of additional information for other channels and/or other time slots. The information may provide additional detail, such as extended program information or may comprise additional time slots.

The processor 202 executes instructions contained in the program guide application 216 to enable the receiver 106 to provide a program guide function and other functionality as described herein. Additionally, the processor 202 executes instructions contained in the memory allocation software 218 to enable the receiver 106 to implement various embodiments of the present invention.

The input/output interface 212 comprises controllers used to couple the processor 202 to the input device 214 and the display device 108. The input/output interface 212 enables the processor 202 to receive commands from the input device 214 and to provide the program guide and the selected program to the display device 108. The interface 212 may comprise, for example, an NTSC, PAL, SECAM or HDTV presentation device. The input device 214 may comprise any device utilized to provide input to the receiver 102, e.g., to access program information for a program shown on the program guide or to select a television program on a channel. Examples of the input device 214 include a remote control, a keypad, a microphone, a touch screen, and the like.

Those programs that are likely to be watched by a user are deemed to be preferred programs, while those programs that are not likely to be watched by a viewer are deemed to be non-preferred programs. The invention operates to reduce the amount of memory used to store program guide information pertaining to non-preferred programs such that program guide information pertaining to more programs may be stored, or that the program guide information associated with preferred programs may be increased in terms of program description and other parameters.

In the art, program guide information comprises "basic program information" and "extended program information." Basic programming information includes any channel, scheduling and programming information displayable on the program guide. Extended program information comprises additional information about the program accessible via the program guide.

The receiver 106 minimizes the amount of program guide information stored in the memory 204 for programs that are not of interest to the viewer by discarding or deleting some or all of the corresponding extended program guide information. By deleting this information, the memory 204 thus conserved may to be utilized to increase the extended program guide information associated with preferred programming or increase the time-slice size for the stored program guide information. Additionally, the receiver 106 may use different levels of storing program information in the memory. For example, the receiver 106 may store some (or predetermined types) of extended program information for programs of different levels of interest.

FIG. 3 depicts exemplary program guide screen imagery. Specifically, the program guide screen imagery 300 of FIG. 3 may be generated by the receiver 106 for display upon the display device 108. The program guide imagery 300 depicts a table of various programs available at different channels 302₁, 302₂, ..., 302ₙ (collectively channels 302). The programs are displayed for a predetermined time frame or schedule length, illustratively two hours. While the program guide 300 of FIG. 3 lists programs for nine channels, it will be appreciated that the program guide 300 may list any number of channels for different schedule times.

In the art, the program guide 300 represents each program as a button accessible by a viewer. The viewer may use the input device 214, e.g., a remote control, to access the button via a cursor or highlight. If the viewer accesses the button, the program guide 300 may display additional information about a corresponding program. The additional information may comprise "extended information" such as description of an episode, actor names, director names, and the like.

FIG. 4 depicts an embodiment of a program guide database 220 stored in the memory 204 of the video receiver 106. In one embodiment, the program guide database 220 comprises a plurality of records 402₁, 402₂, 402₃, 402₄, 402₅, ..., 402ₙ (generally referred to herein as records 402). Each record 402 comprises channel information, schedule information and program information for a particular program. Each record 402 comprises basic programming information 404 and, optionally, extended programming information 406. Multiple entries 402 of a program may exist in the database 220 if a program is listed multiple times in the program schedule.

In the art, the basic programming information 404 comprises any channel, scheduling and programming information displayable on the program guide 300. For example, the basic program information 404 may comprise the channel showing the program, the start time of the program on the channel, the end time of the program on the channel, and the title of the program. Basic program information may also include a rating of a program, or a type or classification of the program. The extended program information 406 comprises additional information about the program. For example, the extended program information 406 may comprise a description of the program, names of actors in the program and the name of the director of the program. Extended program information 406 may also include a review of the program or a description of the program in a different language.

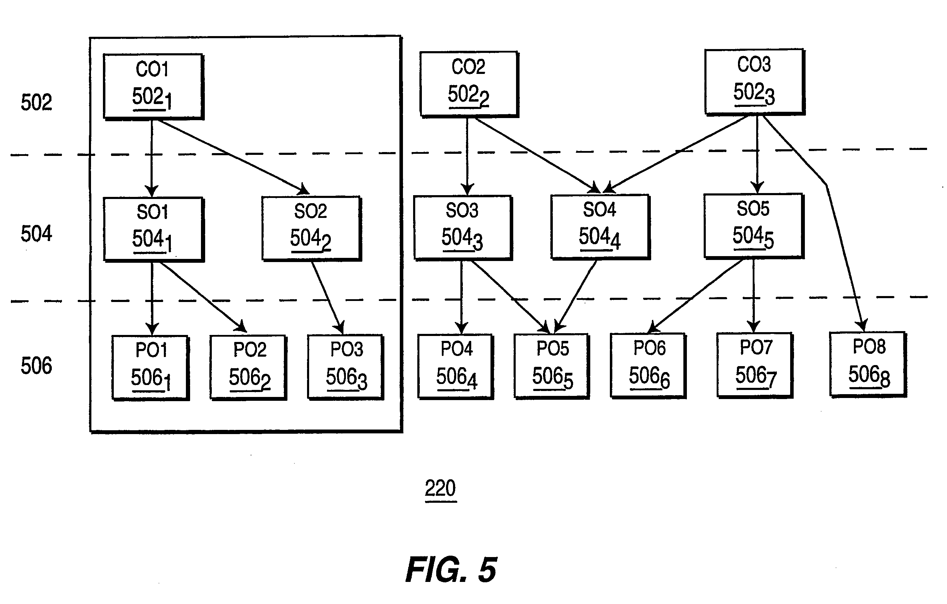

FIG. 5 depicts an embodiment of a program guide database 220 stored in the memory 204 of receiver 106. Specifically, the program guide database 220 of FIG.5 comprises a plurality of channel objects 502, schedule objects 504 and program objects 506.

Each of the channel objects 502 has associated with it one or more schedule objects. For example, channel object 502₁ has associated with it schedule objects 504₁ and 504₂; channel object 502₂ has associated with it schedule objects 504₃ and 504₄; channel object 502₃ has associated with it schedule objects 504₄ and 504₅. It is noted that more or fewer schedule objects may be associated with each channel object, and that schedule objects may be shared by multiple channel objects (as with schedule object 504₄).

Each of the schedule objects 504 has associated with it at least one program object 506. Specifically, schedule object 504₁ has associated with it program object 506₁ and 506₂; schedule object 504₂ has associated with it program object 506₃; schedule object 504₃ has associated with it program objects 506₄ and 506₅; schedule object 504₄ has associated with it program object 506₅; schedule object 504₅ has associated with it program objects 506₆ and 506₇. It is noted that program objects 506 may be shared by multiple schedule objects and also be associated with channel objects 502. For example, channel object 502₃ has associated with it program object 506₈.

Channel objects 502 contain information pertaining to a presentable (e.g., viewable) channel. Such information may include, for example, channel name, tuning parameters, access code information and the like. Channel object information varies depending upon the type of channel to be selected, such as analog or broadcast television channels, cable transported television channels, or channels delivered via other means.

Schedule objects 504 contain information pertaining to a portion of the program guide schedule. For example, a schedule object 504 may contain a start time of a scheduled program, an end time of the scheduled program, a duration or time period for the scheduled program and any offset information suitable for use within the program guide. Program objects 506 contain information pertaining to a single program; such as a television program, a live broadcast, an advertisement, or some other form of (typically) audiovisual signal broadcast or transported to the receiver. In the art, the program object may comprise "basic description information" and, optionally, "extended description information," such as described above with respect to FIGS. 1-4.

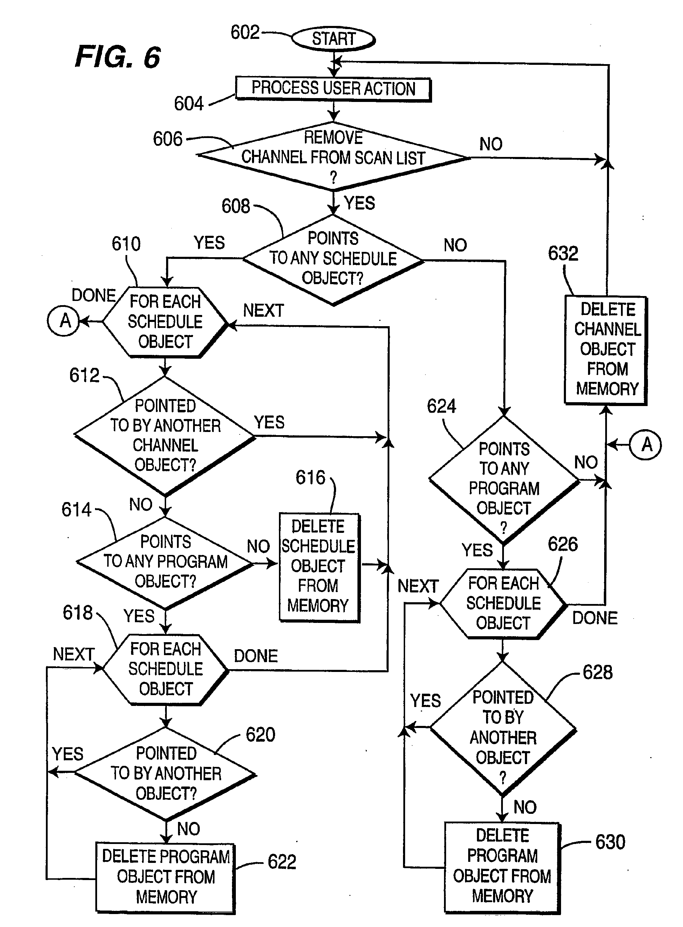

FIG. 6 depicts a flow diagram of a method 600 for allocating the memory 204 in the receiver 106. The method 600 updates the program guide databases 220 in response to removal of channels from the scan list 222. Specifically, the method 600 starts at step 602 and proceeds to step 604 where an action from the user or viewer is processed. At step 606, a query determines whether the user action is to remove a channel from the scan list 222. If the user action is not to remove a channel from the scan list 222, the method 600 returns to step 604 where the next user action is processed.

If the user action is to remove a channel from the scan list 222, the method 600 proceeds to step 608 where a query determines whether a channel object 502 for the channel points to any, i.e., at least one, schedule object 504. If the channel points to at least one schedule object 504, the method proceeds to step 610 where each schedule object 504 is processed. At step 612, a query determines whether the schedule object 504 is pointed to by another channel object 612. That is, step 612 determines whether the program schedule for the schedule object 504 is used by another channel. If the schedule object 504 is pointed to by another channel object 502, then at step 610 the next schedule object 610 (if applicable) is processed. If the schedule object 504 is not pointed to by another channel object 502, then at step 614 a query determines whether the schedule object 504 points to any program object 506. If the schedule object 504 does not point to any program object 506, then at step 616 the schedule object 504 is deleted from the memory 204. The method 600 then returns to step 610.

If, at step 612, the schedule object 504 points to any program object 506, the method 600 proceeds to step 618 where each program object 618 pointed to by the schedule object 504 is processed. At step 620, a query determines whether the program object 506 is pointed to by another object, i.e., either a schedule object 504 or a channel object 502. If the program object 506 is pointed to by another object, the method 600 returns to step 618 where the next program object 506 is processed. If the program object 506 is not pointed to by another object, the method 600 proceeds to step 622 where the program object 504 is deleted from memory. The method 600 returns to step 618 where the next program object 506 is processed. Once all the program objects 506 are processed for the schedule object 504, the method 600 returns to step 620 where the next schedule object 504 is processed. Once all the schedule object(s) 504 for the channel object 502 is processed, the method 600 proceeds to step 632.

Returning to step 608, if the channel object 502 does not point any schedule object 504, the method 600 proceeds to step 624 where a query determines whether the channel object 502 directly points to any program object 506. A channel object 502 may directly point to a program object 506 if there no is schedule object 504 or the program for the program object 506 is not in a program schedule for the channel. If the channel object 502 does not directly point to any program object 506, the method 600 proceeds to step 632.

If the channel object 502 directly points to a program object 506, the method 600 proceeds to step 626 where each program object 506 directly pointed to by the channel object 502 is processed. At step 628, a query determines whether the program object 506 is pointed to by another object for a different channel. If the program object 506 is pointed to by another object, the method 600 proceeds to process the next program object 506 directly pointed to by the channel object 502. If the program object 506 is not pointed to by another object, the program object 506 is deleted from the memory 204.

Once all the program objects 506 pointed by the channel object 502 are processed, the method 600 proceeds to step 632 where the channel object 502 for the channel selected is deleted from the memory 204. The method 600 then returns to step 604 where the next user action is processed.

Although various embodiments which incorporate the teachings of the present invention have been shown and described in detail herein, those skilled in the art can readily devise many other varied embodiments that will still incorporate these teachings.

## Claims

1. A method for adapting the storage of program guide information for a plurality of programs in a receiver memory (204), said method comprising:
receiving program guide information containing a listing of programs scheduled for broadcast over each channel accessible by a receiver,
storing all received program guide information in a program guide database (220) stored in said receiver memory (204);
determining (606) whether a channel is included within a scan list (222) stored in said receiver memory (204) and comprising a plurality of preferred channels; and
deleting (632), from said program guide database (220), program guide information associated with said channel if said channel is not included within said scan list,
**characterized in that**
said program guide database (220) comprises a plurality of database objects including channel objects, schedule objects and program objects,
wherein said channel objects (502) include attributes associated with channel data,
wherein said schedule objects (504) include attributes associated with schedule data, and
wherein said program objects (506) include attributes associated with program data, and
said step of deleting comprises:
determining (628) whether a program object referenced by a channel object associated with said channel not included within the scan list is also referenced by a channel object associated with a different channel;
deleting (630) from said program guide database (220) said referenced program object from memory if said program object is not referenced by another channel object; and
deleting (632) from said program guide database (220) said channel object associated with the channel not included within the scan list.

2. The method of claim 1, wherein said deleting comprises:
determining (612) whether program guide information scheduled for said identified channel is scheduled for use with another channel; and
deleting said program guide information if said program guide information is scheduled for use with no other channel.

3. The method of claim 1, further comprising:
storing additional information for at least one program scheduled on an available preferred channel.

4. The method of claim 1, wherein at least one of said plurality of programs is broadcast from one of a satellite and a terrestrial broadcasting center.

5. The method of claim 1, wherein each of said plurality of programs comprises at least one of a pre-recorded program, a live broadcast, and an advertisement.

6. The method of claim 1, wherein said step of deleting comprises:
determining (612) whether a schedule object referenced by said selected channel object is also referenced by a channel object associated with a different channel;
deleting (616) said referenced schedule object from memory if said schedule object is not referenced by another channel object; and
deleting (632) said selected channel object from memory.

7. Apparatus comprising:
a tuner (206), for receiving a signal including program guide information for a plurality of programs containing a listing of programs scheduled for broadcast over each channel accessible by said apparatus;
a demodulator (208), for demodulating said received signal;
a decoder (210), for decoding said demodulated signal including all received program guide information;
a memory (204), for storing decoded program guide information in a program guide database (220), a scan list (222) of at least one channel viewable on a program guide, and instructions (216); and
a processor, upon executing said instructions, is configured to:
determine (606) whether a channel is included within a scan list comprising a plurality of channels available for viewing; and
delete (632), from said memory, program guide information associated with said channel if said channel is not included within said scan list;
wherein the apparatus is **characterized in that**
said program guide database (220) comprises a plurality of database objects including channel objects, schedule objects and program objects
wherein said channel objects (502) include attributes associated with channel data,
wherein said a schedule objects (504) include attributes associated with schedule data, and
wherein said program objects (506) include attributes associated with program data, and
by the processor, upon executing said instructions, is further configured to:
determine (628) whether a program object referenced by a channel object associated with said channel not included within the scan list is also referenced by a channel object associated with a different channel;
delete (630) from said program guide database (220) said referenced program object from memory if said program object is not referenced by another channel object; and
delete (632) from said program guide database (220) said channel object associated with the channel not included within the scan list.

8. The apparatus of claim 7, wherein said channel selected for removal is provided via an input device (214).

9. The apparatus of claim 7, wherein said program guide information is deleted (632) if said program guide information is scheduled for use with no other channel on said program guide.

10. The apparatus of claim 7, wherein said at least one of said plurality of programs is broadcast from one of a satellite and a terrestrial broadcasting center.

11. The apparatus of claim 7, wherein each of said plurality of programs comprises at least one of a pre-recorded program, a live broadcast, and an advertisement.

## Patentansprüche

1. Verfahren zum Anpassen der Speicherung von Programmführerinformationen für mehrere Programme in einem Empfängerspeicher (204), wobei das Verfahren umfasst:
Empfangen von Programmführerinformationen, die eine Liste von Programmen enthalten, die über jeden Kanal, der für einen Empfänger erreichbar ist, zur Sendung geplant sind;
Speichern aller empfangenen Programmführerinformationen in einer in dem Empfängerspeicher (204) gespeicherten Programmführerdatenbank (220);
Bestimmen (606), ob ein Kanal in einer Suchliste (222) enthalten ist, die in dem Empfängerspeicher (204) gespeichert ist und die mehrere bevorzugte Kanäle umfasst; und
Löschen (632) von dem Kanal zugeordneten Programmführerinformationen aus der Programmführerdatenbank (220), falls der Kanal nicht in der Suchliste enthalten ist,
**dadurch gekennzeichnet, dass**
die Programmführerdatenbank (220) mehrere Datenbankobjekte umfasst, einschließlich Kanalobjekten, Sendeplanobjekten und Programmobjekten,
wobei die Kanalobjekte (502) Kanaldaten zugeordnete Attribute enthalten,
wobei die Sendeplanobjekte (504) Sendeplandaten zugeordnete Attribute enthalten, und
wobei die Programmobjekte (506) Programmdaten zugeordnete Attribute enthalten, und
wobei der Schritt des Löschens umfasst:
Bestimmen (628), ob auf ein Programmobjekt, auf das durch ein Kanalobjekt Bezug genommen wird, das dem nicht in der Suchliste enthaltenen Kanal zugeordnet ist, ebenfalls durch ein einem anderen Kanal zugeordnetes Kanalobjekt Bezug genommen wird;
Löschen (630) des Programmobjekts, auf das Bezug genommen wird, aus der Programmführerdatenbank (220) aus dem Speicher, falls auf das Programmobjekt nicht durch ein anderes Kanalobjekt Bezug genommen wird; und
Löschen (632) des Kanalobjekts, das dem nicht in der Suchliste enthaltenen Kanal zugeordnet ist, aus der Programmführerdatenbank (220).

2. Verfahren nach Anspruch 1, wobei das Löschen umfasst:
Bestimmen (612), ob Programmführerinformationen, die für den identifizierten Kanal geplant sind, zur Verwendung mit einem anderen Kanal geplant sind; und
Löschen der Programmführerinformationen, falls die Programmführerinformationen zur Verwendung mit keinem anderen Kanal geplant sind.

3. Verfahren nach Anspruch 1, das ferner umfasst:
Speichern zusätzlicher Informationen für mindestens ein Programm, das auf einem verfügbaren bevorzugten Kanal geplant ist.

4. Verfahren nach Anspruch 1, wobei mindestens eines der mehreren Programme von einem Satelliten oder von einem terrestrischen Funkhaus gesendet wird.

5. Verfahren nach Anspruch 1, wobei jedes der mehreren Programme eine im Voraus aufgezeichnete Sendung und/oder eine Live-Sendung und/oder eine Werbung umfasst.

6. Verfahren nach Anspruch 1, wobei der Schritt des Löschens umfasst:
Bestimmen (612), ob auf ein Sendeplanobjekt, auf das durch das ausgewählte Kanalobjekt Bezug genommen wird, ebenfalls durch ein einem anderen Kanal zugeordnetes Kanalobjekt Bezug genommen wird;
Löschen (616) des Sendeplanobjekts, auf das Bezug genommen wird, aus dem Speicher, falls auf das Sendeplanobjekt nicht durch ein anderes Kanalobjekt Bezug genommen wird; und
Löschen (632) des ausgewählten Kanalobjekts aus dem Speicher.

7. Vorrichtung, die umfasst:
einen Tuner (206) zum Empfangen eines Signals, das Programmführerinformationen für mehrere Programme enthält, die eine Liste von Programmen enthalten, die über jeden Kanal,
der für die Vorrichtung erreichbar ist, zur Sendung geplant sind;
einen Demodulator (208) zum Demodulieren des empfangenen Signals;
einen Decoder (210) zum Decodieren des demodulierten Signals einschließlich aller empfangenen Programmführerinformationen;
einen Speicher (204) zum Speichern decodierter Programmführerinformationen in einer Programmführerdatenbank (220), eine Suchliste (222) mindestens eines Kanals, der in einem Programmführer angesehen werden kann, und von Anweisungen (216); und
einen Prozessor, der beim Ausführen der Anweisungen konfiguriert ist, zum:
Bestimmen (606), ob ein Kanal in einer Suchliste enthalten ist, die mehrere zum Ansehen verfügbare Kanäle umfasst; und
Löschen (632) von Programmführerinformationen, die dem Kanal zugeordnet sind, aus dem Speicher, falls der Kanal nicht in der Suchliste enthalten ist;
wobei die Vorrichtung **dadurch gekennzeichnet ist, dass**
die Programmführerdatenbank (220) mehrere Datenbankobjekte einschließlich Kanalobjekten, Sendeplanobjekten und Programmobjekten umfasst,
wobei die Kanalobjekte (502) Kanaldaten zugeordnete Attribute enthalten,
wobei die Sendeplanobjekte (504) Sendeplandaten zugeordnete Attribute enthalten, und
wobei die Programmobjekte (506) Programmdaten zugeordnete Attribute enthalten, und beim Ausführen der Anweisungen durch den Prozessor ferner konfiguriert ist zum:
Bestimmen (628), ob auf ein Programmobjekt, auf das durch ein Kanalobjekt Bezug genommen wird, das dem nicht in der Suchliste enthaltenen Kanal zugeordnet ist, ebenfalls durch ein einem anderen Kanal zugeordnetes Kanalobjekt Bezug genommen wird;
Löschen (630) des Programmobjekts, auf das Bezug genommen wird, aus der Programmführerdatenbank (220) aus dem Speicher, falls auf das Programmobjekt nicht durch ein anderes Kanalobjekt Bezug genommen wird; und
Löschen (632) des Kanalobjekts, das dem nicht in der Suchliste enthaltenen Kanal zugeordnet ist, aus der Programmführerdatenbank (220).

8. Vorrichtung nach Anspruch 7, wobei der zum Entfernen ausgewählte Kanal über eine Eingabevorrichtung (214) bereitgestellt wird.

9. Vorrichtung nach Anspruch 7, wobei die Programmführerinformationen gelöscht werden (632), falls die Programmführerinformationen zur Verwendung mit keinem anderen Kanal in dem Programmführer geplant sind.

10. Vorrichtung nach Anspruch 7, wobei das mindestens eine der mehreren Programme von einem Satelliten oder von einem terrestrischen Funkhaus gesendet wird.

11. Vorrichtung nach Anspruch 7, wobei jedes der mehreren Programme eine im Voraus aufgezeichnete Sendung und/oder eine Live-Sendung und/oder eine Werbung umfasst.

## Revendications

1. Un procédé permettant d'adapter le stockage des informations de guide de programmes pour une pluralité de programmes dans une mémoire réceptrice (204), ledit procédé comprenant:
la réception des informations de guide de programmes contenant une liste de programmes programmés pour diffusion sur chaque canal accessible par un récepteur,
le stockage de toutes les informations de guide de programmes reçues dans une base de données de guide de programmes (220) stockée dans ladite mémoire réceptrice (204);
la détermination (606) de la présence ou non d'un canal dans une liste de balayage (222) stockée dans ladite mémoire réceptrice (204) et comprenant une pluralité de canaux préférés; et
la suppression (632), de ladite base de données de guide de programmes (220), des informations de guide de programmes associées audit canal si ledit canal n'est pas inclus dans ladite liste de balayage,
**caractérisé en ce que**
ladite base de données de guide de programmes (220) comprend une pluralité d'objets de base de données y compris d'objets de canal, d'objets de programmation et d'objets de programme,
dans lequel lesdits objets de canal (502) comprennent des attributs associés aux données de canal,
dans lequel lesdits objets de programmation (504) comprennent des attributs associés aux données de programmation, et
dans lequel lesdits objets de programme (506) comprennent des attributs associés aux données de programmes, et
ladite étape de suppression comprend:
la détermination (628) de savoir si un objet de programme référencé par un objet de canal associé audit canal non inclus dans la liste de balayage est aussi référencé par un objet de canal associé à un canal différent;
la suppression (630) de ladite base de données de guides de programme (220) dudit objet de programme référencé de la mémoire si ledit objet de programme n'est pas référencé par un autre objet de canal; et
la suppression (632), de ladite base de données de guide de programmes (220), dudit objet de canal associé au canal non inclus dans ladite liste de balayage.

2. Le procédé selon la revendication 1, dans lequel ladite étape de suppression comprend:
déterminer (612) si les informations de guide de programmes programmées pour ledit canal identifié sont programmées ou non pour utilisation avec un autre canal; et
supprimer lesdites informations de guide de programmes si lesdites informations de guide de programmes sont programmées pour utilisation avec aucun autre canal.

3. Le procédé selon la revendication 1, comprenant en outre:
le stockage d'informations supplémentaires pour au moins un programme programmé sur un canal préféré disponible.

4. Le procédé de la revendication 1, dans lequel au moins un programme de ladite pluralité de programmes est diffusé à partir d'un satellite ou d'un centre de diffusion terrestre.

5. Le procédé de la revendication 1, dans lequel chaque programme de ladite pluralité de programmes comprend au moins un programme pré-enregistré, une diffusion en direct et une publicité.

6. Procédé selon la revendication 1, dans lequel ladite étape de suppression comprend:
la détermination (612) si un objet de programmation référencé ou non par ledit objet de canal sélectionné est aussi référencé par un objet de canal associé à un canal différent;
la suppression (616) dudit objet de programme référencé de la mémoire si ledit objet de programme n'est pas référencé par un autre objet de canal; et
la suppression (632) dudit objet de canal sélectionné de la mémoire.

7. Appareil comprenant:
un syntoniseur (206), pour réception d'un signal comprenant les informations de guide de programmes pour une pluralité de programmes contenant une liste de programmes programmés pour diffusion sur chaque canal accessible par ledit appareil;
un démodulateur (208) permettant la démodulation dudit signal reçu;
un décodeur (210) pour le décodage dudit signal démodulé y compris toutes les informations de guide de programmes reçues;
une mémoire (204), pour stocker des informations de guide de programmes décodées dans une base de données de guide de programmes (220), une liste de balayage (222) d'au moins un canal visible dans un guide de programmes, et des instructions (216); et
un processeur, lors de l'exécution des instructions, configuré pour:
déterminer (606) si un canal est compris ou non dans une liste de balayage comprenant une pluralité de canaux disponibles pour visualisation; et
supprimer (632), de ladite mémoire, des informations de guide de programmes associées audit canal si ledit canal n'est pas inclus dans ladite liste de balayage;
dans lequel l'appareil est **caractérisé en ce que**
ladite base de données de guide de programmes (220) comprend une pluralité d'objets de base de données y compris d'objets de canal, d'objets de programmation et d'objets de programme,
dans lequel lesdits objets de canal (502) comprennent des attributs associés aux données de canal,
dans lequel lesdits objets de programmation (504) comprennent des attributs associés aux données de programmation, et
dans lequel lesdits objets de programme (506) comprennent des attributs associés aux données de programme, et
par le processeur, lors de l'exécution desdites instructions, qui est configuré en outre pour:
déterminer (628) si un objet de programme référencé par un objet de canal associé audit canal non inclus dans la liste de balayage est aussi référencé par un objet de canal associé à un canal différent;
supprimer (630) de ladite base de données de guide de programme (220) ledit objet de programme référencé de la mémoire si ledit objet de programme n'est pas référencé par un autre objet de canal; et
supprimer (632), de ladite base de données de guide de programmes (220), ledit objet de canal associé au canal non inclus dans ladite liste de balayage.

8. L'appareil de la revendication 7, dans lequel ledit canal sélectionné pour suppression est fourni par l'intermédiaire d'un dispositif d'entrée (214).

9. L'appareil de la revendication 7, dans lequel lesdites informations de guide de programmes sont supprimées (632) si lesdites informations de guide de programmes sont programmées pour utilisation avec aucun autre canal dudit guide de programmes.

10. L'appareil de la revendication 7, dans lequel l'au moins un programme de ladite pluralité de programmes est diffusé à partir d'un satellite ou d'un centre de diffusion terrestre.

11. L'appareil de la revendication 7, dans lequel chaque programme de ladite pluralité de programmes comprend au moins un programme pré-enregistré, un programme en direct et une publicité.
